# EUROPÄISCHE PATENTSCHRIFT

(11) **EP 4 234 161 B1**
(45) Veröffentlichungstag und Bekanntmachung des Hinweises auf die Patenterteilung: **21.08.2024**
(21) Anmeldenummer: 23174098.6
(22) Anmeldetag: 18.03.2021
(51) Int. Cl.: B23Q 39/04, B23Q 1/01, B23Q 3/157

(54) **WERKZEUGMASCHINE UND VERFAHREN ZUM BETREIBEN DER WERKZEUGMASCHINE**
MACHINE TOOL AND METHOD FOR OPERATING SAME
MACHINE-OUTIL ET PROCÉDÉ DE FONCTIONNEMENT DE LA MACHINE-OUTIL

(30) Priorität: 24.07.2020 EP 20187633
(43) Veröffentlichungstag der Anmeldung: 30.08.2023
(62) Teilanmeldung aus: 21163345.8
(73) Patentinhaber: Fill Gesellschaft m.b.H., 4942 Gurten (AT)
(72) Erfinder: DALLINGER, Friedrich, 4942 Gurten (AT); GADRINGER, Markus, 4942 Gurten (AT)
(74) Vertreter: Burger, Hannes Alfred

(56) Entgegenhaltungen:
- EP-A1- 1 122 027
- EP-A1- 1 695 791
- EP-A2- 1 402 991
- DE-A1- 102016 015 806
- DE-U1- 29 907 963
- JP-A- H02 279 249
- JP-A- S62 218 007
- JP-A- S62 218 008
- JP-U- S63 110 336
- US-B1- 6 203 478
- ANONYMOUS: "Xflex Twin Machining Centers | Etxetar", 13 September 2019 (2019-09-13), XP093067031, Retrieved from the Internet <URL:https%3A%2F%2Fwww.etxetar.com%2Fen%2Fproducts%2Fmachine-centers%2Fxflex-twin> [retrieved on 20230725]

## Beschreibung

Die Erfindung betrifft eine Werkzeugmaschine, sowie ein Verfahren zum Betreiben der Werkzeugmaschine und eine Bearbeitungsanlage umfassend zumindest zwei Werkzeugmaschinen.

Aus der WO 2005/025801 A1 und der WO 00/37213 A2 sind sogenannte Doppelspindelmaschinen bekannt. Bei derartigen Doppelspindelmaschinen können zwei Werkstücke gleichzeitig mittels jeweils eines in die Werkzeugspindeln eingesetzten Werkzeuges bearbeitet werden. Beide Werkzeugspindeln und damit auch beide Werkzeuge werden synchron in den drei Achsen des Koordinatensystems verfahren, so dass an den beiden Werkstücken identische Bearbeitungsvorgänge ablaufen.

Die aus der WO 2005/025801 A1 und der WO 00/37213 A2 bekannten Doppelspindelmaschinen weisen den Nachteil auf, dass aufgrund deren Aufbau die maximale Länge des Werkstückes, welches bearbeitet werden kann, begrenzt ist.

Ein als D1 im Erteilungsverfahren geführtes Bild zeigt die Werkzeugmaschine "Xflex Twin" der Firma Etxetar, so wie es auf der Webseite etxetar.com am 01-06-2020 zu sehen war. Ein als D1 im Erteilungsverfahren geführtes Bild zeigt ein erstes Paar an übereinander angeordneten Arbeitsspindeln und ein zweites Paar an übereinander angeordneten Arbeitsspindeln, so wie es auf der Webseite etxetar.com am 18-03-2020 zu sehen war. Ein als D1 im Erteilungsverfahren geführtes Bild zeigt übereinander angeordnete Arbeitsspindeln, so wie es auf der Webseite etxetar.com am 15-10-2019 zu sehen war. Ein als D1 im Erteilungsverfahren geführtes Bild zeigt zwei nebeneinander angeordnete Arbeitsspindeln, so wie es auf der Webseite etxetar.com am 15-10-2019 zu sehen war.

Die US6203478B1 offenbart eine Werkzeugmaschine mit zwei übereinander angeordneten Spindeln zur Bearbeitung von zwei übereinander aufgenommenen Kurbelwellen.

Aufgabe der vorliegenden Erfindung war es, die Nachteile des Standes der Technik zu überwinden und eine verbesserte Werkzeugmaschine, sowie ein verbessertes Verfahren zum Betreiben der Werkzeugmaschine, sowie eine verbesserte Bearbeitungsanlage zur Verfügung zu stellen.

Diese Aufgabe wird durch eine Vorrichtung und ein Verfahren gemäß den Ansprüchen gelöst.

Erfindungsgemäß ist eine Werkzeugmaschine nach dem beiliegenden Anspruch 1 ausgebildet.

Die erfindungsgemäße Werkzeugmaschine bringt den Vorteil mit sich, dass lange Werkstücke mit hoher Effizienz einfach bearbeitet werden können.

Vorteilhaft ist auch eine Ausprägung, gemäß welcher vorgesehen sein kann, dass der erste Werkstücktisch um eine erste Schwenkachse, welche parallel zu einer horizontalen X-Achse ausgerichtet ist, schwenkbar gelagert ist und der zweite Werkstücktisch um eine zweite Schwenkachse, welche parallel zur X-Achse ausgerichtet ist, schwenkbar gelagert ist. Dies bringt den Vorteil mit sich, dass das zu bearbeitende Werkstück bzw. die zu bearbeitenden Werkstücke mit einer hohen Genauigkeit und einer guten Effizienz bearbeitet werden können.

Gemäß einer besonderen Ausprägung ist es möglich, dass an einem Längsende der Werkstückspannvorrichtung ein Werkzeugmagazin angeordnet ist, wobei das Werkzeugmagazin ein Kettenumlaufmagazin umfasst, wobei ein gerades Trum des Kettenumlaufmagazines vertikal ausgerichtet ist, wobei die erste Arbeitsspindel und die zweite Arbeitsspindel zum geraden Trum des Kettenumlaufmagazines verschiebbar sind, wobei ein Abstand zwischen der ersten Arbeitsspindel und der zweiten Arbeitsspindel einer Teilung oder einem Vielfachen der Teilung des Kettenumlaufmagazines entspricht. Hierbei ist von Vorteil, dass die erste Arbeitsspindel und die zweite Arbeitsspindel zum Kettenumlaufmagazin bewegt werden können, um das nicht mehr benötigte Arbeitswerkzeug ablegen und ein neues Bearbeitungswerkzeug aufnehmen zu können. Dadurch dass der Abstand zwischen der ersten Arbeitsspindel und der zweiten Arbeitsspindel einer Teilung oder einer Vielfachen einer Teilung des Kettenumlaufmagazins entspricht, können die in der ersten Arbeitsspindel und zweiten Arbeitsspindel aufgenommenen Bearbeitungswerkzeuge gleichzeitig abgelegt bzw. in einem breiteren Schritt gleichzeitig neue Bearbeitungswerkzeuge aufgenommen werden.

Weiters kann vorgesehen sein, dass an einem zweiten Längsende der Werkstückspannvorrichtung ein weiteres Werkzeugmagazin angeordnet ist, wobei das weitere Werkzeugmagazin spiegelgleich zum Werkzeugmagazin ausgebildet ist. Dies bringt eine Erhöhung der Effizienz der Werkzeugmaschine mit sich.

Erfindungsgemäß ist ein Verfahren zum Betreiben einer Werkzeugmaschine nach dem beiliegenden Anspruch 5 vorgesehen.

Das erfindungsgemäße Verfahren bringt den Vorteil mit sich, dass lange Werkstücke mit hoher Effizienz einfach bearbeitet werden können.

Insbesondere kann es vorteilhaft sein, wenn ein Wechseln des in der ersten Arbeitsspindel gespannten Bearbeitungswerkzeuges und ein Wechseln des in der zweiten Arbeitsspindel gespannten Bearbeitungswerkzeuges zeitgleich erfolgt, wobei die Bearbeitungswerkzeuge in einem Kettenumlaufmagazin mit mehreren Bearbeitungswerkzeugaufnahmen aufgenommen sind, wobei jene Bearbeitungswerkzeuge, welche in jenen Bearbeitungswerkzeugaufnahmen angeordnet sind, die dem Abstand zwischen der ersten Arbeitsspindel und der zweiten Arbeitsspindel entsprechen, baugleich ausgebildet sind, wobei in einem ersten Verfahrensschritt das in der ersten Arbeitsspindel gespannte Bearbeitungswerkzeug und das in der zweiten Arbeitsspindel gespannte Bearbeitungswerkzeug jeweils in eine freie Bearbeitungswerkzeugaufnahme des Kettenumlaufmagazines abgelegt werden und in einem zweiten Verfahrensschritt das Kettenumlaufmagazin oder die beiden Arbeitsspindeln verschoben werden, sodass die erste Arbeitsspindel und die zweite Arbeitsspindel mit den neu aufzunehmenden Bearbeitungswerkzeugen ausgerichtet sind und wobei in einem dritten Verfahrensschritt die neu aufzunehmenden Bearbeitungswerkzeuge in die erste Arbeitsspindel und in die zweite Arbeitsspindel aufgenommen werden. Durch diese Maßnahme kann die Rüstzeit verkürzt werden, wobei die Effizienz der Werkzeugmaschine weiter verbessert werden kann.

Ferner kann vorgesehen sein, dass das erste Werkstück, das zweite Werkstück, das Werkstück und das Werkstück gleich ausgebildet sind, wobei die Bearbeitung am ersten Werkstück, am zweiten Werkstück, am Werkstück und am Werkstück parallel in jeweils zeitgleich ausgeführten Arbeitsschritten erfolgt. Durch diese Maßnahme kann die Effizienz der Werkzeugmaschine weiter verbessert werden, wobei gleichzeitig die Steuerung der Werkzeugmaschine möglichst einfach gehalten werden kann.

Ein Bearbeitungswerkzeug im Sinne dieses Dokumentes kann beispielsweise ein spanabhebendes Bearbeitungswerkzeug sein. Ein Bearbeitungswerkzeug im Sinne dieses Dokumentes kann beispielsweise auch ein Reibrührschweißwerkzeug sein. Im Weitesten Sinne kann als Bearbeitungswerkzeug auch ein in der Arbeitsspindel aufgenommenes Messmittel oder Prüfmittel gesehen werden.

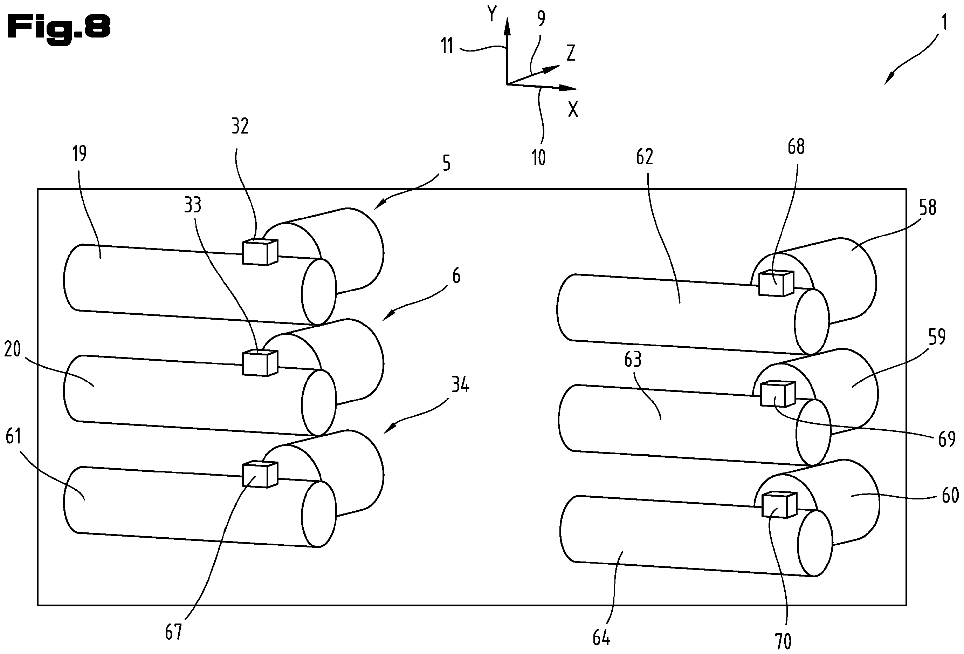

Zum besseren Verständnis der Erfindung wird diese anhand der nachfolgenden Figuren näher erläutert, wobei nur die Fig. 8 die Erfindung darstellt.

Es zeigen jeweils in stark vereinfachter, schematischer Darstellung:
- Fig. 1: eine perspektivische Ansicht eines ersten Ausführungsbeispiels einer Werkzeugmaschine;
- Fig. 2: eine Seitenansicht eines weiteren Ausführungsbeispiels der Werkzeugmaschine mit drei Arbeitsspindeln;
- Fig. 3: eine perspektivische Ansicht eines weiteren Ausführungsbeispiels der Werkzeugmaschine mit einer Schwenkbrücke;
- Fig. 4: eine perspektivische Ansicht eines weiteren Ausführungsbeispiels der Werkzeugmaschine mit einem Kettenumlaufmagazin;
- Fig. 5: eine schematische Darstellung eines Ausführungsbeispiels einer Bearbeitungsanlage mit zwei nebeneinander angeordneten Werkzeugmaschinen;
- Fig. 6: eine stark vereinfachte Darstellung eines weiteren Ausführungsbeispiels der Werkzeugmaschine mit drei übereinander angeordneten Werkstücktischen;
- Fig. 7: eine stark vereinfachte Darstellung eines weiteren Ausführungsbeispiels der Werkzeugmaschine mit drei übereinander angeordneten Werkstücktischen und zwei nebeneinander angeordneten Reihen von Arbeitsspindeln;
- Fig. 8: eine stark vereinfachte Darstellung eines erfindungsgemäßen Ausführungsbeispiels der Werkzeugmaschine mit drei übereinander angeordneten Werkstücktischen und weiteren daneben angeordneten Werkstücktischen und zwei nebeneinander angeordneten Reihen von Arbeitsspindeln, welche jeweils einem Werkstücktisch zugeordnet sind;
- Fig. 9: eine stark vereinfachte Darstellung eines weiteren Ausführungsbeispiels der Werkzeugmaschine mit drei an einer Schwenktrommel übereinander angeordneten Werkstücktischen;
- Fig. 10: eine stark vereinfachte Darstellung eines weiteren Ausführungsbeispiels der Werkzeugmaschine mit drei an einer Schwenktrommel übereinander angeordneten Werkstücktischen und zwei nebeneinander angeordneten Reihen von Arbeitsspindeln;
- Fig. 11: eine schematische Seitenansicht eines weiteren Ausführungsbeispiels der Werkzeugmaschine mit vier übereinander angeordneten Werkstücktischen und zwei übereinander angeordneten Arbeitsspindeln;
- Fig. 12: eine schematische Seitenansicht eines weiteren Ausführungsbeispiels der Werkzeugmaschine mit zwei übereinander angeordneten Werkstücktischen und jeweils zwei an einem Werkstücktisch angeordneten Werkstücken;
- Fig. 13: eine schematische Seitenansicht eines weiteren Ausführungsbeispiels der Werkzeugmaschine mit zwei übereinander angeordneten Werkstücktischen und jeweils einem am Werkstücktisch angeordneten Rundtisch zur Aufnahme von jeweils zwei Werkstücken;
- Fig. 14: eine stark vereinfachte Darstellung eines weiteren Ausführungsbeispiels der Werkzeugmaschine mit drei übereinander angeordneten Werkstücktischen, wobei die einzelnen Werkstücktische versetzt zueinander angeordnet sind;
- Fig. 15: eine stark vereinfachte Darstellung eines weiteren Ausführungsbeispiels der Werkzeugmaschine mit drei übereinander angeordneten Werkstücktischen, wobei die einzelnen Werkstücktische in Richtung der Z-Achse verschiebbar sind.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

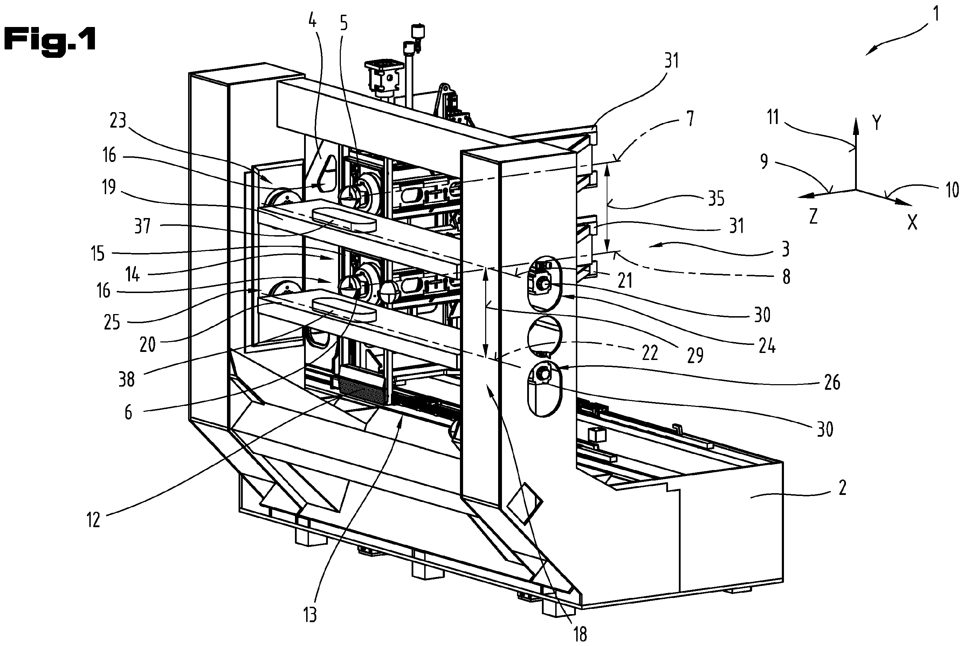

Fig. 1 zeigt eine schematische Darstellung einer Werkzeugmaschine 1 zur spanabhebenden Bearbeitung von Werkstücken 32, 33. Die Werkzeugmaschine 1 weist ein Maschinengestell 2 auf, welches als Basis für die daran angebauten Bauteile dient.

Das Maschinengestell 2 ist in Fig. 1 der Übersichtlichkeit halber nur schematisch dargestellt. Es sei jedoch festgehalten, dass das Maschinengestell 2 am Aufstellungsort verankert sein kann. Darüber hinaus dient das Maschinengestell 2 natürlich zur Aufnahme sämtlicher Bauteile der Werkzeugmaschine 1.

Weiters ist eine Spindelverstellvorrichtung 3 ausgebildet, welche am Maschinengestell 2 angeordnet ist bzw. mit diesem gekoppelt ist. Die Spindelverstellvorrichtung 3 weist einen Arbeitskopf 4 auf, an welchem eine erste Arbeitsspindel 5 und eine zweite Arbeitsspindel 6 gelagert sind. Die erste Arbeitsspindel 5 ist um eine erste Spindelachse 7 drehbar am Arbeitskopf 4 gelagert und die zweite Arbeitsspindel 6 ist um eine zweite Spindelachse 8 drehbar am Arbeitskopf 4 gelagert. Die beiden Arbeitsspindeln 5, 6 dienen jeweils zur Aufnahme eines Bearbeitungswerkzeugs und weisen hierzu eine Spannvorrichtung zur Aufnahme des Bearbeitungswerkzeuges auf.

Die Arbeitsspindeln 5, 6 sind mittels der Spindelverstellvorrichtung 3 in einer Z-Achse 9, in einer X-Achse 10 und in einer im rechten Winkel zur Z-Achse 9 und X-Achse 10 angeordneten Y-Achse 11 relativ zum Maschinengestell 2 verstellbar. Insbesondere kann vorgesehen sein, dass die Z-Achse 9 horizontal angeordnet ist. Die Z-Achse 9 ist parallel zur ersten Spindelachse 7 und zur zweiten Spindelachse 8 angeordnet. Weiters kann vorgesehen sein, dass die X-Achse 10 ebenfalls horizontal angeordnet ist. Die X-Achse 10 ist im rechten Winkel zur Z-Achse 9 angeordnet.

Die Spindelverstellvorrichtung 3 weist eine Hauptverstelleinheit 12 auf, welche mittels einer X-Achsen-Linearführung 13 mit dem Maschinengestell 2 gekoppelt ist. Zur vereinfachten Veranschaulichung ist die X-Achsen-Linearführung 13 nur rudimentär dargestellt. Insbesondere kann vorgesehen sein, dass die X-Achsen-Linearführung 13 vier oder auch mehr Führungsschlitten aufweist, welche mit der Hauptverstelleinheit 12 gekoppelt sind und welche mit zwei Führungsschienen zusammenwirken, die mit dem Maschinengestell 2 gekoppelt sind.

Durch die X-Achsen-Linearführung 13 ist die Hauptverstelleinheit 12 in Richtung der X-Achse 10 relativ bezüglich des Maschinengestells 2 verschiebbar.

Weiters kann vorgesehen sein, dass eine Höhenverstelleinheit 14 ausgebildet ist, welche mittels einer Y-Achsen-Linearführung 15 mit der Hauptverstelleinheit 12 gekoppelt ist. Durch die Y-Achsen-Linearführung 15 ist die Höhenverstelleinheit 14 entlang der Y-Achse 11 relativ zur Hauptverstelleinheit 12 bzw. relativ zum Maschinengestell 2 verschiebbar.

In einer ersten, in Fig. 1 dargestellten Ausführungsvariante, kann vorgesehen sein, dass die erste Arbeitsspindel 5 und die zweite Arbeitsspindel 6 jeweils an einer eigenen Höhenverstelleinheit 14 angeordnet sind und somit unabhängig voneinander entlang einer Y-Achse 11 verschiebbar sind. Bei dieser Ausführungsvariante wird für jede der Höhenverstelleinheiten 14 ein eigener Antrieb benötigt.

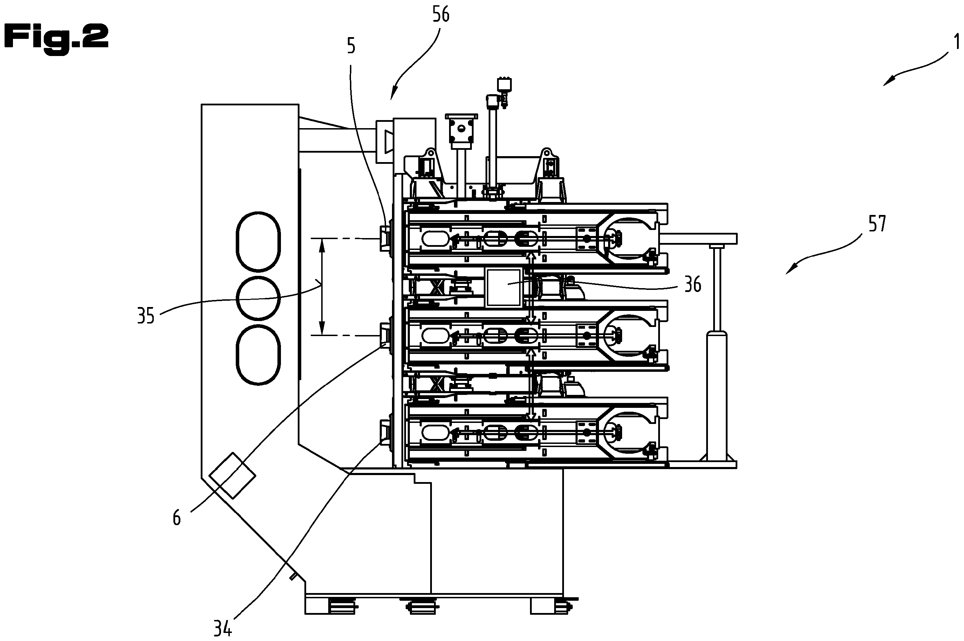

In einer weiteren, in Fig. 2 dargestellten Ausführungsvariante kann vorgesehen sein, dass die erste Arbeitsspindel 5 und die zweite Arbeitsspindel 6 an einer gemeinsamen Höhenverstelleinheit 14 angeordnet sind und somit gemeinsam entlang einer Y-Achse 11 verschiebbar sind. Bei dieser Ausführungsvariante wird für die gemeinsame Höhenverstelleinheiten 14 nur ein einzelner Antrieb benötigt.

Die Y-Achsen-Linearführung 15 kann ebenfalls eine Führungsschiene aufweisen, welche an der Hauptverstelleinheit 12 angeordnet ist und welche mit einem oder mehreren Führungsschlitten gekoppelt ist, die an der ersten Arbeitsspindel 5 bzw. der zweiten Arbeitsspindel 6 angeordnet sind.

Weiters kann, wie aus der Darstellung nach Fig. 1 ersichtlich, vorgesehen sein, dass die erste Arbeitsspindel 5 mittels einer ersten Z-Achsen-Linearführung 16 in der Z-Achse 9 verschiebbar ist und dass die zweite Arbeitsspindel 6 mittels einer zweiten Z-Achsen-Linearführung 16 in der Z-Achse 9 verschiebbar ist, wobei die erste Arbeitsspindel 5 und die zweite Arbeitsspindel 6 unabhängig voneinander verschiebbar sind.

Außerdem umfasst die Werkzeugmaschine 1 eine Werkstückspannvorrichtung 18, welche zur Aufnahme der zu bearbeitenden Werkstücke 32, 33 dient.

Die Werkstückspannvorrichtung 18 weist einen ersten Werkstücktisch 19 und einen zweiten Werkstücktisch 20 auf. Der erste Werkstücktisch 19 ist bezüglich einer ersten Schwenkachse 21 relativ zum Maschinengestell 2 verschwenkbar. Der zweite Werkstücktisch 20 ist bezüglich einer zweiten Schwenkachse 22 relativ zum Maschinengestell 2 verschwenkbar.

Die beiden Schwenkachsen 21, 22 der beiden Werkstücktische 19, 20 sind parallel zur X-Achse 10 angeordnet. Insbesondere ist vorgesehen, dass der erste Werkstücktisch 19 zur Aufnahme des ersten Werkstückes 32 dient und der zweite Werkstücktisch 20 zur Aufnahme des zweiten Werkstückes 33 dient.

Insbesondere kann vorgesehen sein, dass das erste Werkstück 32 und das zweite Werkstück 33 in deren Außenkontur gleich zueinander ausgebildet sind und an den beiden Werkstücken 32, 33 die gleichen Bearbeitungsschritte durchgeführt werden. Die beiden Werkstücktische 19, 20 sind der Übersichtlichkeit halber in Fig. 1 ebenfalls nur rudimentär dargestellt. Natürlich können verschiedenste Befestigungsmöglichkeiten zur Befestigung der Werkstücke 32, 33 an den Werkstücktischen 19, 20 vorgesehen sein. Insbesondere kann vorgesehen sein, dass an den beiden Werkstücktischen 19, 20 jeweils Rundtische ausgebildet sind, welche zur Befestigung der Werkstücke 32, 33 und gleichzeitig zum Verdrehen der der Werkstücke 32, 33 relativ zu den Werkstücktischen 19, 20 dienen.

Der erste Werkstücktisch 19 ist mittels einer ersten Schwenklagerung 23 und einer zweiten Schwenklagerung 24 drehbar am Maschinengestell 2 gelagert. Analog dazu ist der zweite Werkstücktisch 20 mittels einer ersten Schwenklagerung 25 und einer zweiten Schwenklagerung 26 drehbar am Maschinengestell 2 gelagert. Die Schwenklagerungen 23, 24, 25, 26 können beispielsweise in Form von Lagerböcken ausgebildet sein, welche entsprechenden Aufnahmen am Werkstücktisch 19 befestigt sind.

Wie aus Fig. 1 ersichtlich, kann vorgesehen sein, dass der erste Werkstücktisch 19 einen Werkstückspannbereich aufweist, welcher sich zwischen der ersten Schwenklagerung 23 und der zweiten Schwenklagerung 24 erstreckt. Analog dazu kann vorgesehen sein, dass der zweite Werkstücktisch 20 einen Werkstückspannbereich aufweist, welcher sich zwischen der ersten Schwenklagerung 25 und der zweiten Schwenklagerung 26 des zweiten Werkstücktisches 20 erstreckt.

Der Werkstückspannbereich des ersten Werkstücktisches 19 weist eine Werkstückspannlänge 27 auf. Der Werkstückspannbereich des zweiten Werkstücktisches 20 weist eine Werkstückspannlänge 28 auf. Vorzugsweise ist vorgesehen, dass der erste Werkstücktisch 19 und der zweite Werkstücktisch 20 gleich ausgebildet sind.

Die beiden Werkstücktische 19, 20 bzw. die beiden Schwenkachsen 21, 22 sind in einem Abstand 29 zueinander angeordnet. Der Abstand 29 erstreckt sich ebenfalls in Richtung der Y-Achse 11. Durch die beschriebene Ausprägung wird erreicht, dass die erste Arbeitsspindel 5 dem ersten Werkstücktisch 19 zugeordnet ist und dass die zweite Arbeitsspindel 6 dem zweiten Werkstücktisch 20 zugeordnet ist.

Insbesondere kann vorgesehen sein, dass in der Werkstückspannvorrichtung 18 eine Verstellvorrichtung angeordnet ist, mittels welcher der Abstand 29 der beiden Werkstücktische 19, 20 bzw. der beiden Schwenkachsen 21, 22 zueinander verstellt werden kann.

Mittels der erfindungsgemäßen Werkzeugmaschine 1 können zwei Werkstücke 32, 33, die baugleich ausgebildet sind, parallel zueinander bearbeitet werden. Hierbei wird das erste Werkstück 32 am ersten Werkstücktisch 19 und das zweite Werkstück 33 am zweiten Werkstücktisch 20 gespannt. Das Werkzeug der ersten Arbeitsspindel 5 bearbeitet das erste Werkstück 32 und das Werkzeug der zweiten Arbeitsspindel 6 bearbeitet das zweite Werkstück 33. Durch den erfindungsgemäßen Aufbau der Werkzeugmaschine 1 erfolgt die Bearbeitung des ersten Werkstückes 32 und des zweiten Werkstückes 33 synchron. Somit können mittels einer möglichst einfach aufgebauten Werkzeugmaschine 1 zwei Werkstücke 32, 33 gleichzeitig bearbeitet werden, wodurch die Auslastung der Werkzeugmaschine 1 bzw. deren Produktivität verbessert werden kann.

Darüber hinaus kann vorgesehen sein, dass der erste Werkstücktisch 19 eine Antriebseinheit zum verschwenken aufweist und der zweite Werkstücktisch 20 ebenfalls eine Antriebseinheit 30 zum Verschwenken aufweist. Bei einem derartigen Ausführungsbeispiel können der erste Werkstücktisch 19 und der zweite Werkstücktisch 20 unabhängig voneinander verschwenkt werden.

In einer Alternativvariante kann vorgesehen sein, dass die Werkstücktische 19, 20 mittels einer gemeinsamen Antriebseinheit 30 geschwenkt werden.

Die Antriebseinheit 30 kann beispielsweise in Form eines Torquemotors ausgebildet sein.

Der Torquemotor kann beispielsweise mittels eines Riementriebes mit den beiden Werkstücktischen 19, 20 gekoppelt sein. Alternativ dazu kann vorgesehen sein, dass der Torquemotor mittels eines Schneckengetriebes mit den beiden Werkstücktischen 19, 20 gekoppelt ist.

In wieder einer andern Alternativvariante kann vorgesehen sein, dass der Rotor des Torquemotors direkt in den Werkstücktischen 19, 20 integriert ist und somit je Werkstücktisch 19, 20 ein eigener Torquemotor ausgebildet ist.

Weiters kann vorgesehen sein, dass die beiden Arbeitsspindeln 5, 6 von einer gemeinsamen Antriebseinheit 31 angetrieben werden. Die Antriebseinheit 31 kann beispielsweise durch einen Drehstromasynchronmotor gebildet sein, welcher mit einem Frequenzumrichter angesteuert wird.

Weiters ist es auch denkbar, dass die Antriebseinheit 31 in Form eines Synchronmotors ausgebildet ist.

Natürlich kann auch vorgesehen sein, dass jede der Arbeitsspindeln 5, 6 von einer eigenen Antriebseinheit 31 angetrieben wird. Hierbei kann vorgesehen sein, dass die Arbeitsspindel 5, 6 gleichzeitig der Läufer der Antriebseinheit 31 ist.

Die Arbeitsspindeln 5, 6 der in Fig. 1 dargestellten Werkzeugmaschine 1 sind bezüglich der Z-Achse 9, der X-Achse 10 und der Y-Achse 11 verschiebbar und bezüglich einer Parallelen zur Y-Achse verschwenkbar. Die in den Werkstücktischen 19, 20 aufgenommenen Werkstücke 32, 33 sind bezüglich einer Parallelen zur X-Achse 10 verschwenkbar. Somit weisen die Arbeitsspindeln 5, 6 fünf Freiheitsgrade bezüglich der Verstellung relativ zum bearbeitenden Werkstück 32, 33 auf.

Weiters kann vorgesehen sein, dass zumindest eine der Arbeitsspindeln 5, 6 einzeln und unabhängig von der anderen Arbeitsspindel 5, 6 in einer Axialrichtung der Spindelachse 7, 8 der Arbeitsspindel 5, 6 relativ zum Arbeitskopf 4 verstellbar ausgebildet ist. In einer Weiterbildung kann vorgesehen sein, dass beide Arbeitsspindeln 5, 6 in einer Axialrichtung der Spindelachse 7, 8 der Arbeitsspindel 5, 6 relativ zum Arbeitskopf 4 verstellbar ausgebildet sind.

In der Fig. 2 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen. Insbesondere wird darauf hingewiesen, dass das Ausführungsbeispiel jener Werkzeugmaschine 1, welche in Fig. 2 dargestellt ist, die gleichen Merkmale oder zumindest teilweise die gleichen Merkmale wie jenes Ausführungsbeispiel der Werkzeugmaschine 1, welche in Fig. 1 dargestellt ist aufweisen kann.

Wie aus Fig. 2 ersichtlich, kann vorgesehen sein, dass zusätzlich zur ersten Arbeitsspindel 5 und zur zweiten Arbeitsspindel 6 eine dritte Arbeitsspindel 34 ausgebildet ist, wobei die erste Arbeitsspindel 5, die zweite Arbeitsspindel 6 und die dritte Arbeitsspindel 34 vertikal übereinander angeordnet sind.

Unabhängig von der Ausbildung einer dritten Arbeitsspindel 34 kann vorgesehen sein, dass ein Abstand 35 zwischen der ersten Arbeitsspindel 5 und der zweiten Arbeitsspindel 6 mittels einer Spindelabstandskompensationsvorrichtung 36 in der vertikalen Y-Achse 11 verstellbar ist.

Wie aus Fig. 2 weiters ersichtlich, kann vorgesehen sein, dass eine weitere X-Achsen-Linearführung 56 ausgebildet ist, welche von der X-Achsen-Linearführung 13 distanziert angeordnet ist. Insbesondere kann vorgesehen sein, dass die X-Achsen-Linearführung 13 an einem unteren Abschnitt der Höhenverstelleinheit 14 angeordnet ist und dass die weitere X-Achsen-Linearführung 56 an einem oberen Abschnitt der Höhenverstelleinheit 14 angeordnet ist. Wie aus Fig. 2 weiters ersichtlich, kann vorgesehen sein, dass die weitere X-Achsen-Linearführung 56 mit der Werkstückspannvorrichtung gekoppelt ist. Durch die in diesem Absatz beschriebenen Maßnahmen kann eine weitere Stabilisierung der Höhenverstelleinheit 14 und somit eine Verbesserung der Genauigkeit der Werkzeugmaschine 1 erreicht werden.

Wie in Fig. 2 schematisch angedeutet, kann vorgesehen sein, dass eine Hubunterstützung 57 ausgebildet ist, welche zwischen der Hauptverstelleinheit 12 und einer der Arbeitsspindeln 5, 6, 34 wirkt. Durch die Hubunterstützung 57 kann die Gewichtskraft der Arbeitsspindeln 5, 6, 34 zumindest teilweise ausgeglichen werden, wodurch die Energieeffizienz Werkzeugmaschine 1 verbessert werden kann. Die Hubunterstützung 57 kann beispielsweise in Form eines Pneumatikzylinders mit einem Druckspeicher ausgebildet sein. Weiters ist es natürlich auch denkbar, dass die Hubunterstützung 57 beispielsweise in Form eines Gegengewichtes ausgebildet ist, welches mittels eines Zugmittels über eine Umlenkung mit der Arbeitsspindel 5, 6, 34 gekoppelt ist. Insbesondere kann vorgesehen sein, dass für jede der Arbeitsspindeln 5, 6, 34 eine eigene Hubunterstützung 57 ausgebildet ist.

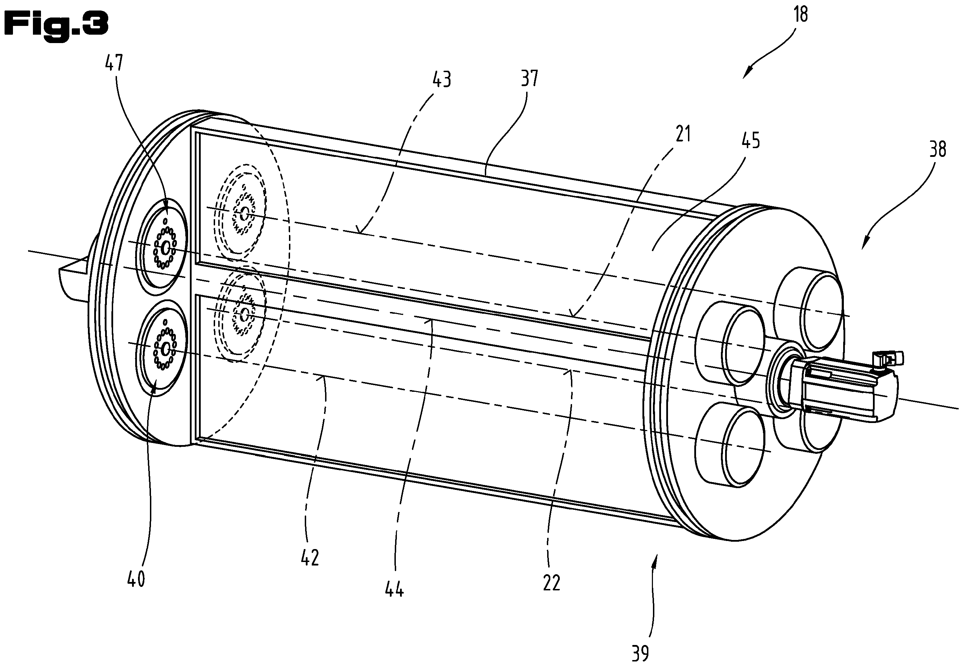

In der Fig. 3 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Fidetaillierte Beschreibung in den vorangegangenen Figuren 1 und 2 hingewiesen bzw. Bezug genommen.

Wie aus Fig. 3 ersichtlich, kann vorgesehen sein, dass die Werkstückspannvorrichtung 18 eine Schwenkbrücke 37 aufweist, an welcher an einer ersten Seite 38 der erste Werkstücktisch 19 und der zweite Werkstücktisch 20 angeordnet sind. An einer zweiten Seite 39 der Schwenkbrücke 37 sind ein erster rückwärtiger Werkstücktisch 40 und einen zweiter rückwärtiger Werkstücktisch 41 ausgebildet.

Der erste rückwärtige Werkstücktisch 40 ist um eine erste rückwärtige Schwenkachse 42, welche parallel zu der horizontalen X-Achse 10 ausgerichtet ist, schwenkbar gelagert.

Der zweite rückwärtige Werkstücktisch 41 ist um eine zweite rückwärtige Schwenkachse 43, welche parallel zur X-Achse 10 ausgerichtet ist, schwenkbar gelagert.

Weiters ist vorgesehen, dass die Schwenkbrücke 37, um eine parallel zur X-Achse 10 ausgerichtete Schwenkbrückenachse 44 schwenkbar gelagert ist, sodass je nach Schwenkstellung der Schwenkbrücke 37
die erste Arbeitsspindel 5 dem ersten Werkstücktisch 19 zugeordnet ist und die zweite Arbeitsspindel 6 dem zweiten Werkstücktisch 20 zugeordnet ist oder
die erste Arbeitsspindel 5 dem ersten rückwärtigen Werkstücktisch 40 zugeordnet ist und die zweite Arbeitsspindel 6 dem zweiten rückwärtigen Werkstücktisch 41 zugeordnet ist.

Mit anderen Worten ausgedrückt, kann entweder die erste Seite 38 der Schwenkbrücke 37 oder die zweite Seite 39 der Schwenkbrücke 37 in den Bearbeitungsraum der Werkzeugmaschine 1 eingeschwenkt sein.

Wie in Fig. 3 schematisch angedeutet, kann vorgesehen sein, dass zwischen der ersten Seite 38 der Schwenkbrücke 37 und der zweiten Seite 39 der Schwenkbrücke 37 eine Trennwand 45 ausgebildet ist. Die Trennwand 45 kann als Blechkonstruktion ausgebildet sein.

Insbesondere kann vorgesehen sein, dass die Schwenkbrücke 37 derart in der Werkzeugmaschine 1 aufgenommen ist, dass die Trennwand 45 zusammen mit einer Einhausung der Werkzeugmaschine 1 den Bearbeitungsraum der Werkzeugmaschine abschließt, sodass dieser von außen nicht zugänglich ist.

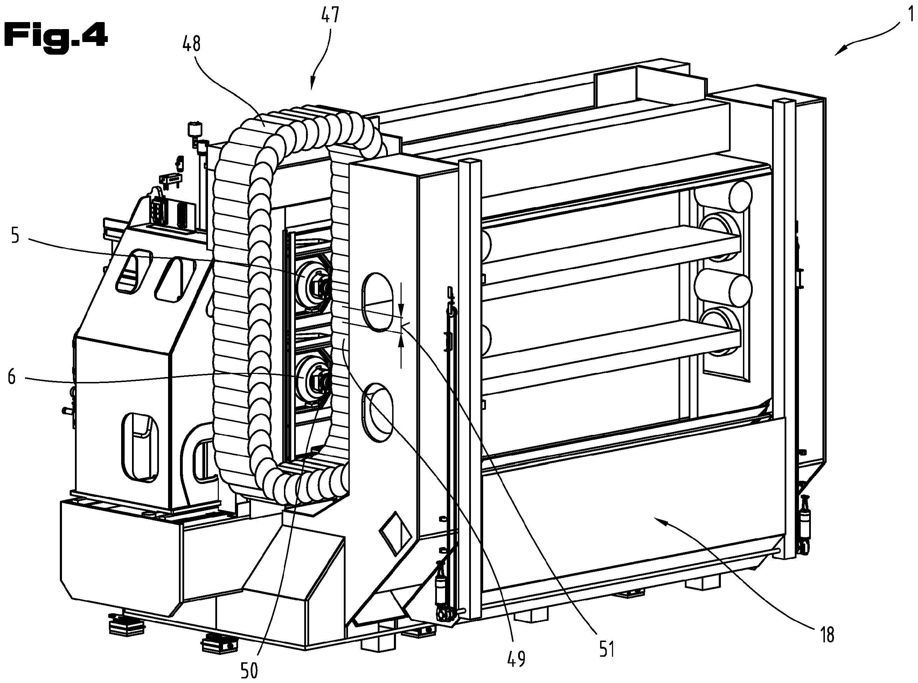

In der Fig. 4 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, kann vorgesehen sein, dass an einem Längsende 46 der Werkstückspannvorrichtung 18 ein Werkzeugmagazin 47 angeordnet ist. Das Werkzeugmagazin 47 umfasst ein Kettenumlaufmagazin 48, wobei ein gerades Trum 49 des Kettenumlaufmagazines 48 vertikal ausgerichtet ist. Die erste Arbeitsspindel 5 und die zweite Arbeitsspindel 6 sind bis zum geraden Trum 49 des Kettenumlaufmagazines 48 verschiebbar. Die Bearbeitungswerkzeuge 50 können somit direkt mittels der ersten Arbeitsspindel 5 bzw. der zweiten Arbeitsspindel 6 aus dem Kettenumlaufmagazin 48 herausgenommen werden, bzw. in dieses abgelegt werden.

Insbesondere kann vorgesehen sein, dass der Abstand 35 zwischen der ersten Arbeitsspindel 5 und der zweiten Arbeitsspindel 6 einer Teilung 51 oder einem Vielfachen der Teilung 51 des Kettenumlaufmagazines 48 entspricht. Als Teilung 51 wird der Abstand der einzelnen Bearbeitungswerkzeugaufnahmen 52 des Kettenumlaufmagazines 48 bezeichnet.

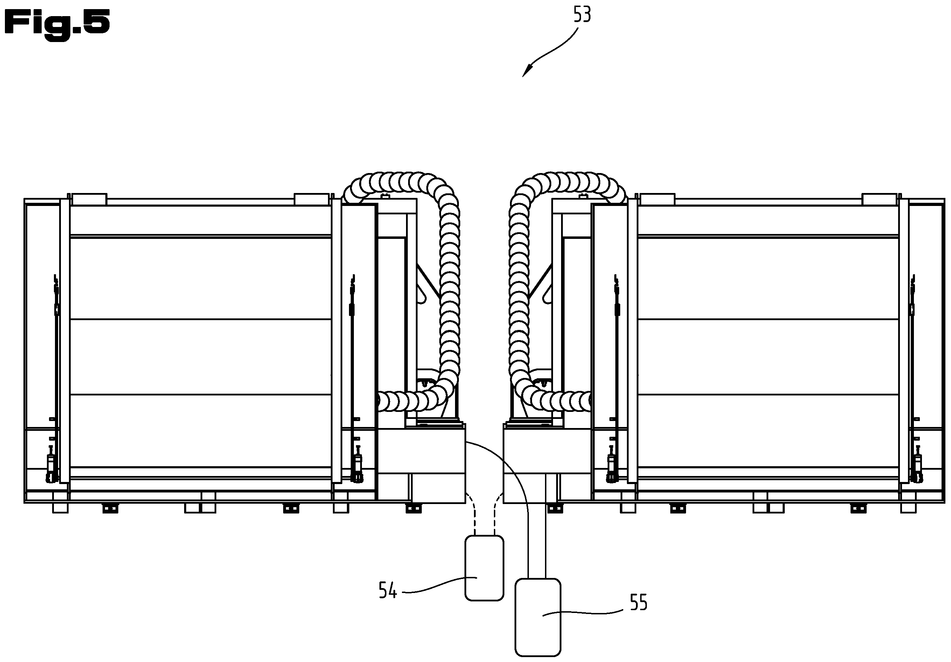

In der Fig. 5 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, kann vorgesehen sein, dass eine Bearbeitungsanlage 53 ausgebildet ist, in welcher zumindest zwei der Werkzeugmaschinen 1 nebeneinander aufgestellt sind. Insbesondere kann vorgesehen sein, dass für beide Werkzeugmaschinen 1 eine gemeinsame Steuerungstechnik 54 und/oder eine gemeinsame Medienversorgung 55 ausgebildet ist.

Im Ausführungsbeispiel nach Fig. 5 sind die beiden Werkzeugmaschinen 1 gespiegelt ausgebildet.

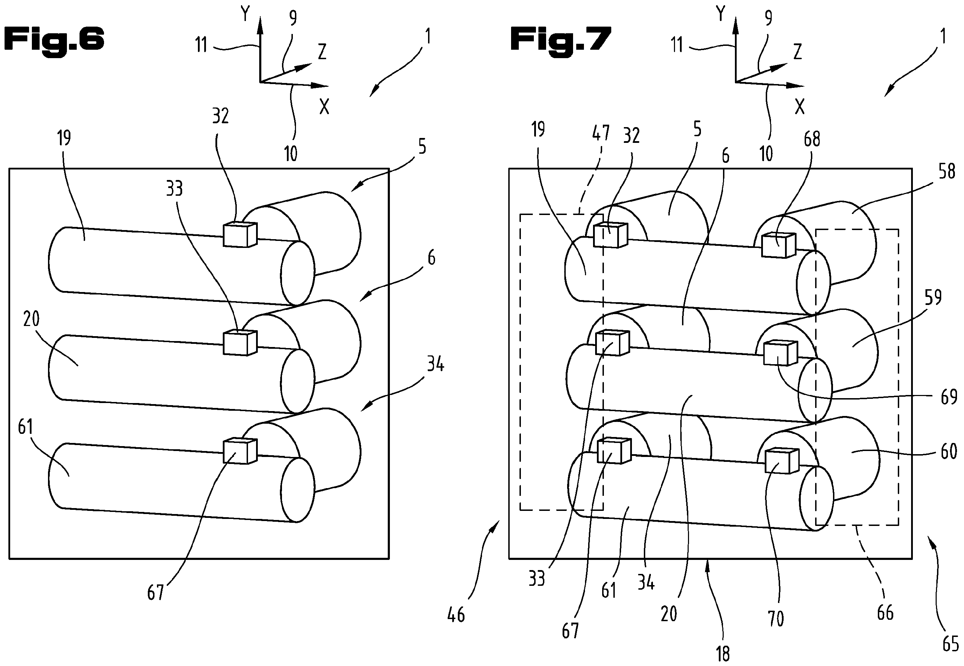

In der Fig. 6 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen. Die Werkzeugmaschine 1 ist in Fig. 6 der Übersichtlichkeit halber sehr vereinfacht dargestellt.

Wie aus Fig. 6 ersichtlich, kann vorgesehen sein, dass die Werkzeugmaschine 1 unterhalb der ersten Arbeitsspindel 5 und der zweiten Arbeitsspindel 6 die dritte Arbeitsspindel 34 aufweist. Die Arbeitsspindeln 5, 6, 34 können übereinander angeordnet sein. Wie aus Fig. 6 weiters ersichtlich, kann vorgesehen sein, dass die erste Arbeitsspindel 5 dem ersten Werkstücktisch 19 zugeordnet ist und zum Bearbeiten des darauf aufgenommenen ersten Werkstückes 32 dient. Die zweite Arbeitsspindel 6 kann dem zweiten Werkstücktisch 20 zugeordnet sein und zum Bearbeiten des darauf aufgenommenen zweiten Werkstückes 33 dienen. Die dritte Arbeitsspindel 34 kann einem dritten Werkstücktisch 61 zugeordnet sein und zum Bearbeiten des darauf aufgenommenen dritten Werkstückes 67 dienen.Die einzelnen Arbeitsspindeln 5, 6, 34 können einzeln und unabhängig voneinander verschiebbar sein. Alternativ dazu ist es auch denkbar, dass die einzelnen Arbeitsspindeln 5, 6, 34 an einem gemeinsamen Arbeitskopf 4 aufgenommen sind und zusammen verschiebbar sind.

In der Fig. 7 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

Wie aus Fig. 7 ersichtlich, kann vorgesehen sein, dass neben der ersten Arbeitsspindel 5 eine vierte Arbeitsspindel 58 angeordnet ist, welche dem ersten Werkstücktisch 19 zugeordnet sein kann. Weiters kann neben der zweiten Arbeitsspindel 6 eine fünfte Arbeitsspindel 59 ausgebildet sein, welche dem zweiten Werkstücktisch 20 zugeordnet sein kann. Weiters kann neben der dritten Arbeitsspindel 34 eine sechste Arbeitsspindel 60 ausgebildet sein, welche dem dritten Werkstücktisch 61 zugeordnet sein kann. Die vierte Arbeitsspindel 58 kann zur Bearbeitung eines vierten Werkstückes 68 dienen. Die fünfte Arbeitsspindel 59 kann zur Bearbeitung eines fünften Werkstückes 69 dienen. Die sechste Arbeitsspindel 60 kann zur Bearbeitung eines sechsten Werkstückes 70 dienen.

Wie aus Fig. 7 weiters ersichtlich, kann vorgesehen sein, dass an einem der Längsenden 46 der Werkstückspannvorrichtung 18 das Werkmagazin 47 angeordnet ist. Am zweiten Längsende 65 der Werkstückspannvorrichtung 18 kann ein weiteres Werkzeugmagazin 66 angeordnet sein.

In der Fig. 8 ist in einer schematischen Darstellung eine erfindungsgemäße Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 7 verwendet werden. Um unnötige Wiederholungen zu vermeiden, wird auf die detaillierte Beschreibung in den vorangegangenen Figuren 1 bis 7 hingewiesen bzw. Bezug genommen.

Wie aus Fig. 8 ersichtlich, kann vorgesehen sein, dass die erste Arbeitsspindel 5 dem ersten Werkstücktisch 19 zugeordnet ist und zum Bearbeiten des darauf aufgenommenen ersten Werkstückes 32 dient. Die zweite Arbeitsspindel 6 kann dem zweiten Werkstücktisch 20 zugeordnet sein und zum Bearbeiten des darauf aufgenommenen zweiten Werkstückes 33 dienen. Die Arbeitsspindel 34 kann einem Werkstücktisch 61 zugeordnet sein und zum Bearbeiten des darauf aufgenommenen Werkstückes 67 dienen.

Wie aus Fig. 8 weiters ersichtlich, ist es vorgesehen, dass neben dem ersten Werkstücktisch 19 ein Werkstücktisch 62 ausgebildet ist. Weiters kann vorgesehen sein, dass neben dem zweiten Werkstücktisch 20 ein Werkstücktisch 63 angeordnet ist. Weiters kann vorgesehen sein, dass neben dem Werkstücktisch 61 ein Werkstücktisch 64 angeordnet ist. Die Arbeitsspindel 58 kann dem Werkstücktisch 62 zugeordnet sein, die Arbeitsspindel 59 kann dem Werkstücktisch 63 zugeordnet sein, die Arbeitsspindel 60 kann dem Werkstücktisch 64 zugeordnet sein,

Insbesondere kann vorgesehen sein, dass der erste Werkstücktisch 19, der zweite Werkstücktisch 20, der Werkstücktisch 61, der Werkstücktisch 62, der fünfte Werkstücktisch 63 und der Werkstücktisch 64 an einem gemeinsamen Maschinengestell 2 aufgenommen sind.

Bei der Werkzeugmaschine 1, wie sie in Fig. 8 dargestellt ist, kann vorgesehen sein, dass am ersten Werkstücktisch 19 ein erstes Längsende des ersten Werkstückes 32 aufgenommen ist und dass am Werkstücktisch 62 ein zweites Längsende des ersten Werkstückes 32 aufgenommen ist. Dies bringt den Vorteil mit sich, dass durch diese Maßnahme längere Werkstücke an der Werkzeugmaschine 1 gespannt werden können. Hierbei wird das erste Längsende des ersten Werkstückes 32 mittels der ersten Arbeitsspindel 5 bearbeitet und das zweite Längsende des ersten Werkstückes 32 mittels der Arbeitsspindel 58 bearbeitet. Bei einer derartigen Ausführung muss eine Drehbewegung des ersten Werkstücktisches 19 und eine Drehbewegung des Werkstücktisch 62 synchronisiert sein, Insbesondere ist es denkbar, dass sich ein möglicher Bearbeitungsbereich der ersten Arbeitsspindel 5 und ein möglicher Bearbeitungsbereich der Arbeitsspindel 58 überlagern, sodass erreicht werden kann, dass das erste Werkstück 32 auf seiner vollen Länge bearbeitet werden kann.

Natürlich können analog dazu der zweite Werkstücktisch 20 und der fünfte Werkstücktisch 63 zur gemeinsamen Aufnahme des zweiten Werkstückes 33 dienen.

Weiters können analog dazu der Werkstücktisch 61 und der Werkstücktisch 64 zur gemeinsamen Aufnahme des dritten Werkstückes 67 dienen.

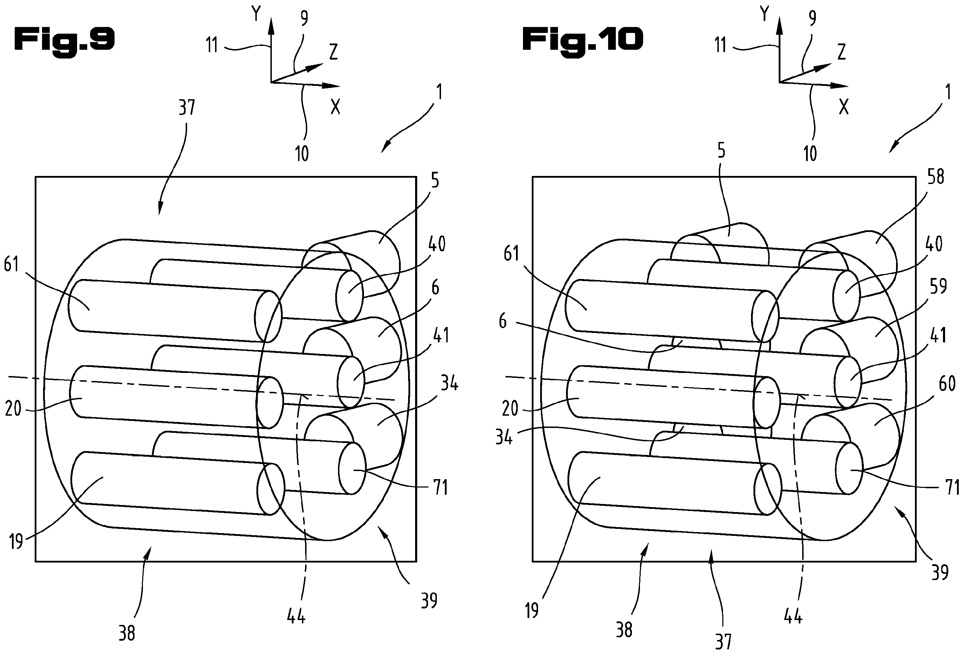

In der Fig. 9 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 8 verwendet werden. Um unnötige Wiederholungen zu vermeiden, wird auf die detaillierte Beschreibung in den vorangegangenen Figuren 1 bis 8 hingewiesen bzw. Bezug genommen.

Wie aus Fig.9 ersichtlich, kann vorgesehen sein, dass an der ersten Seite 38 der Schwenkbrücke 37 der erste Werkstücktisch 19, der zweite Werkstücktisch 20 und der dritte Werkstücktisch 61 angeordnet sind. An der zweiten Seite 39 der Schwenkbrücke 37 können der erste rückwärtige Werkstücktisch 40, der zweite rückwärtige Werkstücktisch 41 und der dritte rückwärtige Werkstücktisch 71 angeordnet sein.

Wie aus Fig. 9 weiters ersichtlich, kann vorgesehen sein, dass die erste Arbeitsspindel 5 dem ersten Werkstücktisch 19 bzw. dem ersten rückwärtigen Werkstücktisch 40 zugeordnet ist. Weiters kann vorgesehen sein, dass die zweite Arbeitsspindel 6 dem zweiten Werkstücktisch 20 bzw. dem zweiten rückwärtigen Werkstücktisch 41 zugeordnet ist. Weiters kann vorgesehen sein, dass die dritte Arbeitsspindel 34 dem dritten Werkstücktisch 61 bzw. dem dritten rückwärtigen Werkstücktisch 71 zugeordnet ist.

In der Fig. 10 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 9 verwendet werden. Um unnötige Wiederholungen zu vermeiden, wird auf die detaillierte Beschreibung in den vorangegangenen Figuren 1 bis 9 hingewiesen bzw. Bezug genommen.

Wie aus Fig. 10 ersichtlich, kann vorgesehen sein, dass an der ersten Seite 38 der Schwenkbrücke 37 der erste Werkstücktisch 19, der zweite Werkstücktisch 20 und der dritte Werkstücktisch 61 angeordnet sind. An der zweiten Seite 39 der Schwenkbrücke 37 können der erste rückwärtige Werkstücktisch 40, der zweite rückwärtige Werkstücktisch 41 und der dritte rückwärtige Werkstücktisch 71 angeordnet sein.

Wie aus Fig. 10 weiters ersichtlich, kann vorgesehen sein, dass die erste Arbeitsspindel 5 dem ersten Werkstücktisch 19 bzw. dem ersten rückwärtigen Werkstücktisch 40 zugeordnet ist. Weiters kann vorgesehen sein, dass die zweite Arbeitsspindel 6 dem zweiten Werkstücktisch 20 bzw. dem zweiten rückwärtigen Werkstücktisch 41 zugeordnet ist. Weiters kann vorgesehen sein, dass die dritte Arbeitsspindel 34 dem dritten Werkstücktisch 61 bzw. dem dritten rückwärtigen Werkstücktisch 71 zugeordnet ist.

Wie aus Fig. 10 weiters ersichtlich, kann vorgesehen sein, dass neben der ersten Arbeitsspindel 5 eine vierte Arbeitsspindel 58 angeordnet ist, welche dem ersten Werkstücktisch 19 bzw. dem ersten rückwärtigen Werkstücktisch 40 zugeordnet sein kann. Weiters kann neben der zweiten Arbeitsspindel 6 eine fünfte Arbeitsspindel 59 ausgebildet sein, welche dem zweiten Werkstücktisch 20 bzw. dem zweiten rückwärtigen Werkstücktisch 41 zugeordnet sein kann. Weiters kann neben der dritten Arbeitsspindel 34 eine sechste Arbeitsspindel 60 ausgebildet sein, welche dem dritten Werkstücktisch 61 bzw. dem dritten rückwärtigen Werkstücktisch 71 zugeordnet sein kann. Die vierte Arbeitsspindel 58 kann zur Bearbeitung eines vierten Werkstückes 68 dienen. Die fünfte Arbeitsspindel 59 kann zur Bearbeitung eines fünften Werkstückes 69 dienen. Die sechste Arbeitsspindel 60 kann zur Bearbeitung eines sechsten Werkstückes 70 dienen.

In den Ausführungsbeispielen nach den Figuren 6 bis 10 kann natürlich auch jeweils die dritte Arbeitsspindel 34, der dritte Werkstücktisch 61, die sechste Arbeitsspindel 60, der sechste Werkstücktisch 64 oder der dritte rückwärtige Werkstücktisch 71 weggelassen werden, sodass nur zwei Arbeitsspindeln bzw. Werkstücktische übereinander angeordnet sind.

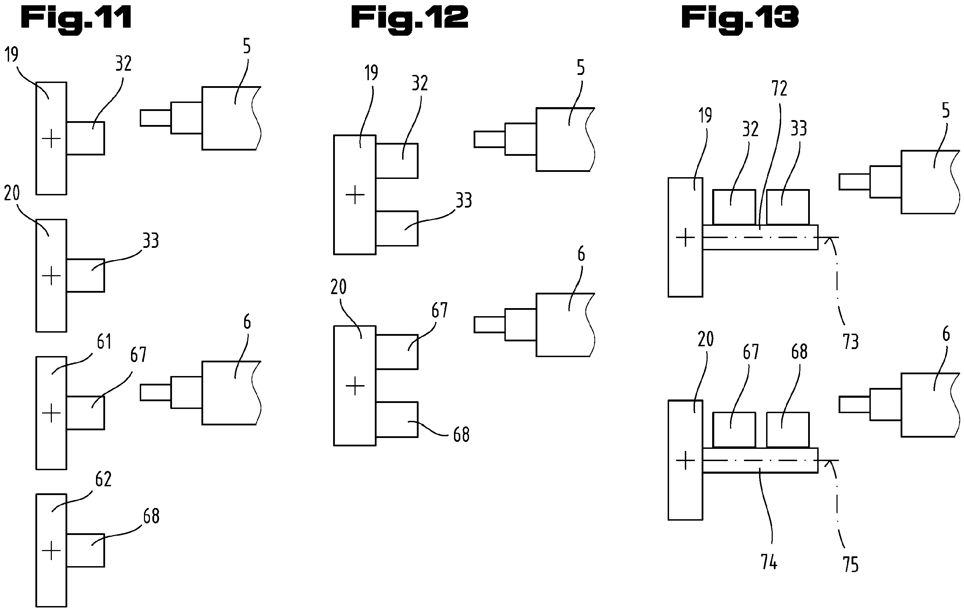

In der Fig. 11 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 10 verwendet werden. Um unnötige Wiederholungen zu vermeiden, wird auf die detaillierte Beschreibung in den vorangegangenen Figuren 1 bis 10 hingewiesen bzw. Bezug genommen.

In Fig. 11 ist die Werkzeugmaschine 1 in einer Seitenansicht dargestellt.

Wie aus Fig. 11 ersichtlich, kann vorgesehen sein, dass die erste Arbeitsspindel 5 zum Bearbeiten eines am ersten Werkstücktisch 19 gespannten Werkstückes und zeitlich versetzt zum Bearbeiten eines am zweiten Werkstücktisch 20 gespannten Werkstückes ausgebildet ist.

Die zweite Arbeitsspindel 6 kann zum Bearbeiten eines am dritten Werkstücktisch 61 gespannten Werkstückes und zeitlich versetzt zum Bearbeiten eines am vierten Werkstücktisch 62 gespanten Werkstückes ausgebildet sein. Auch bei dieser Ausführung kann vorgesehen sein, dass die einzelnen Werkstücktische übereinander angeordnet sind.

In der Fig. 12 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 11 verwendet werden. Um unnötige Wiederholungen zu vermeiden, wird auf die detaillierte Beschreibung in den vorangegangenen Figuren 1 bis 11 hingewiesen bzw. Bezug genommen.

In Fig. 12 ist die Werkzeugmaschine 1 in einer Seitenansicht dargestellt.

Wie aus Fig. 12 ersichtlich, kann vorgesehen sein, dass am ersten Werkstücktisch 19 ein erstes Werkstück 32 und ein zweites Werkstück 33 vertikal übereinanderliegend aufgenommen sind. Die erste Arbeitsspindel 5 kann zum zeitlich versetzten Bearbeiten des am ersten Werkstücktisch 19 aufgenommenen ersten Werkstückes 32 und des am ersten Werkstücktisch 19 aufgenommenen zweiten Werkstückes 33 dienen. Die zweite Arbeitsspindel 6 kann zum zeitlich versetzten Bearbeiten des am zweiten Werkstücktisch 20 aufgenommenen dritten Werkstückes 67 und des am zweiten Werkstücktisch 20 aufgenommenen vierten Werkstückes 68 dienen.

In der Fig. 13 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 12 verwendet werden. Um unnötige Wiederholungen zu vermeiden, wird auf die detaillierte Beschreibung in den vorangegangenen Figuren 1 bis 12 hingewiesen bzw. Bezug genommen.

In Fig. 13 ist die Werkzeugmaschine 1 in einer Seitenansicht dargestellt.

Wie aus Fig. 13 ersichtlich, kann vorgesehen sein, dass am ersten Werkstücktisch 19 ein erster Rundtisch 72 aufgenommen ist, welcher eine Schwenkachse 73 aufweist. Am ersten Rundtisch 72 können bezüglich der ersten Schwenkachse 73 in Axialrichtung versetzt das erste Werkstück 32 und das zweite Werkstück 33 aufgenommen sein.

Weiters kann vorgesehen sein, dass am zweiten Werkstücktisch 20 ein zweiter Rundtisch 74 aufgenommen ist, welcher eine zweite Schwenkachse 75 aufweist. Am zweiten Rundtisch 74 können bezüglich der zweiten Schwenkachse 75 in Axialrichtung versetzt das dritte Werkstück 67 und das vierte Werkstück 68 aufgenommen sein.

Natürlich ist es auch denkbar, dass mehrere Werkstücke an einem Rundtisch angeordnet sind. Weiters ist es auch denkbar, dass mehrere Rundtische übereinander angeordnet sind.

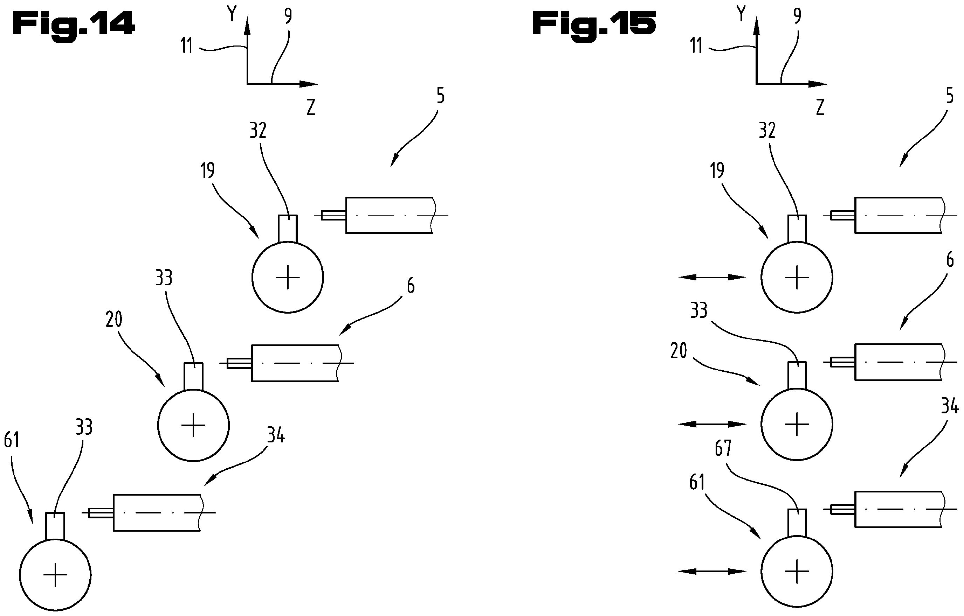

In der Fig. 14 ist in einer schematischen Darstellung eine weitere und gegebenenfalls für sich eigenständige Ausführungsform der Werkzeugmaschine 1 in einer Seitenansicht gezeigt, wobei wiederum für gleiche Teile gleiche Bezugszeichen bzw. Bauteilbezeichnungen wie in den vorangegangenen Figuren 1 bis 13 verwendet werden. Um unnötige Wiederholungen zu vermeiden, wird auf die detaillierte Beschreibung in den vorangegangenen Figuren 1 bis 13 hingewiesen bzw. Bezug genommen.

Wie aus Fig. 14 ersichtlich, kann vorgesehen sein, dass der erste Werkstücktisch 19, insbesondere der oberste Werkstücktisch 19, in Richtung der Z-Achse 9 am weitesten zum Arbeitskopf 4 hin versetzt angeordnet ist. Der zweite Werkstücktisch 20 kann in Richtung der Z-Achse 9 weiter vom Arbeitskopf beabstandet sein, als der erste Werkstücktisch 19. Der dritte Werkstücktisch 61 kann in Richtung der Z-Achse 9 weiter vom Arbeitskopf 4 beabstandet sein, als der zweite Werkstücktisch 20.

In der Fig. 15 ist in einer schematischen Darstellung eine weitere und gegebenenfalls für sich eigenständige Ausführungsform der Werkzeugmaschine 1 in einer Seitenansicht gezeigt, wobei wiederum für gleiche Teile gleiche Bezugszeichen bzw. Bauteilbezeichnungen wie in den vorangegangenen Figuren 1 bis 14 verwendet werden. Um unnötige Wiederholungen zu vermeiden, wird auf die detaillierte Beschreibung in den vorangegangenen Figuren 1 bis 14 hingewiesen bzw. Bezug genommen.

Wie aus Fig. 15 ersichtlich, kann vorgesehen sein, dass die einzelnen Werkstücktische 19, 20, 61 in Richtung der Z-Achse 9 verschiebbar sind.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Werkzeugmaschine | 26 | zweite Schwenklagerung zweiter Werkstücktisch |
| 2 | Maschinengestell | | |
| 3 | gemeinsame Spindelverstellvorrichtung | 27 | Werkstückspannlänge Werkstückspannbereich erster Werkstücktisch |
| 4 | Arbeitskopf | | |
| 5 | erste Arbeitsspindel | 28 | Werkstückspannlänge Werkstückspannbereich zweiter Werkstücktisch |
| 6 | zweite Arbeitsspindel | | |
| 7 | erste Spindelachse | | |
| 8 | zweite Spindelachse | 29 | Abstand Werkstücktische |
| 9 | Z-Achse | 30 | Antriebseinheit Werkstücktische |
| 10 | X-Achse | 31 | Antriebseinheit Arbeitsspindeln |
| 11 | Y-Achse | 32 | erstes Werkstück |
| 12 | Hauptverstelleinheit | 33 | zweites Werkstück |
| 13 | X-Achsen-Linearführung | 34 | Arbeitsspindel |
| 14 | Höhenverstelleinheit | 35 | Abstand erste Arbeitsspindel |
| 15 | Y-Achsen-Linearführung | | zweite Arbeitsspindel |
| 16 | Z-Achsen-Linearführung | 36 | Spindelabstandskompensationsvorrichtung |
| 17 | Schwenklagerung Arbeitskopf | | |
| 18 | Werkstückspannvorrichtung | 37 | Schwenkbrücke |
| 19 | erster Werkstücktisch | 38 | erste Seite der Schwenkbrücke |
| 20 | zweiter Werkstücktisch | 39 | zweite Seite der Schwenkbrücke |
| 21 | erste Schwenkachse | 40 | erster rückwärtiger Werkstücktisch |
| 22 | zweite Schwenkachse | 41 | zweiter rückwärtiger Werkstücktisch |
| 23 | erste Schwenklagerung erster Werkstücktisch | | |
| | | 42 | erste rückwärtige Schwenkachse |
| 24 | zweite Schwenklagerung erster Werkstücktisch | 43 | zweite rückwärtige Schwenkachse |
| | | 44 | Schwenkbrückenachse |
| 25 | erste Schwenklagerung zweiter Werkstücktisch | 45 | Trennwand |
| | | 46 | Längsende |
| | | 47 | Werkzeugmagazin |
| 48 | Kettenumlaufmagazin | | |
| 49 | gerades Trum | | |
| 50 | Bearbeitungswerkzeug | | |
| 51 | Teilung | | |
| 52 | Bearbeitungswerkzeugaufnahme | | |
| 53 | Bearbeitungsanlage | | |
| 54 | Steuerungstechnik | | |
| 55 | Medienversorgung | | |
| 56 | weitere X-Achsen-Linearführung | | |
| 57 | Hubunterstützung | | |
| 58 | Arbeitsspindel | | |
| 59 | Arbeitsspindel | | |
| 60 | Arbeitsspindel | | |
| 61 | Werkstücktisch | | |
| 62 | Werkstücktisch | | |
| 63 | Werkstücktisch | | |
| 64 | Werkstücktisch | | |
| 65 | zweites Längsende | | |
| 66 | weiteres Werkzeugmagazin | | |
| 67 | drittes Werkstück | | |
| 68 | viertes Werkstück | | |
| 69 | fünftes Werkstück | | |
| 70 | sechstes Werkstück | | |
| 71 | dritter rückwärtiger Werkstücktisch | | |
| 72 | erster Rundtisch | | |
| 73 | Schwenkachse erster Rundtisch | | |
| 74 | zweiter Rundtisch | | |
| 75 | Schwenkachse zweiter Rundtisch | | |

## Patentansprüche

1. Werkzeugmaschine (1) umfassend:
ein Maschinengestell (2);
zumindest eine erste Arbeitsspindel (5), welche um eine erste Spindelachse (7) drehbar gelagert ist;
zumindest eine zweite Arbeitsspindel (6), welche um eine zweite Spindelachse (8) drehbar gelagert ist;
eine Werkstückspannvorrichtung (18), welche zum Aufnehmen zumindest eines ersten Werkstückes (32) und eines zweiten Werkstückes (33) ausgebildet ist,
wobei die erste Arbeitsspindel (5) und die zweite Arbeitsspindel (6) vertikal übereinander angeordnet sind,
wobei, am Maschinengestell (2) ein Werkstücktisch (62) und ein Werkstücktisch (63) angeordnet sind, wobei ein erster Werkstücktisch (19) und einer der Werkstücktische (62) bezüglich der horizontalen X-Achse (10) zueinander beabstandet angeordnet sind und wobei ein zweiter Werkstücktisch (20) und der andere der Werkstücktische (63) bezüglich der horizontalen X-Achse (10) zueinander beabstandet angeordnet sind, wobei die erste Arbeitsspindel (5) dem ersten Werkstücktisch (19) zugeordnet ist und wobei die zweite Arbeitsspindel (6) dem zweiten Werkstücktisch (20) zugeordnet ist und wobei eine Arbeitsspindel (58) einem der Werkstücktische (62) zugeordnet ist und wobei eine Arbeitsspindel (59) dem anderen Werkstücktisch (63) zugeordnet ist.

2. Werkzeugmaschine (1) nach Anspruch 1, **dadurch gekennzeichnet, dass** die Werkstückspannvorrichtung (18) zumindest den ersten Werkstücktisch (19) und den zweiten Werkstücktisch (20) umfasst, wobei der erste Werkstücktisch (19) um eine erste Schwenkachse (21), welche parallel zu einer horizontalen X-Achse (10) ausgerichtet ist, schwenkbar gelagert ist und der zweite Werkstücktisch (20) um eine zweite Schwenkachse (22), welche parallel zur X-Achse (10) ausgerichtet ist, schwenkbar gelagert ist.

3. Werkzeugmaschine (1) nach Anspruch 1, **dadurch gekennzeichnet, dass** an einem Längsende (46) der Werkstückspannvorrichtung (18) ein Werkzeugmagazin (47) angeordnet ist, wobei das Werkzeugmagazin (47) ein Kettenumlaufmagazin (48) umfasst, wobei ein gerades Trum (49) des Kettenumlaufmagazines (48) vertikal ausgerichtet ist, wobei die erste Arbeitsspindel (5) und die zweite Arbeitsspindel (6) zum geraden Trum (49) des Kettenumlaufmagazines (48) verschiebbar sind, wobei ein Abstand (35) zwischen der ersten Arbeitsspindel (5) und der zweiten Arbeitsspindel (6) einer Teilung (51) oder einem Vielfachen der Teilung (51) des Kettenumlaufmagazines (48) entspricht.

4. Werkzeugmaschine (1) nach Anspruch 3, **dadurch gekennzeichnet, dass** an einem zweiten Längsende (65) der Werkstückspannvorrichtung (18) ein weiteres Werkzeugmagazin (66) angeordnet ist, wobei das weitere Werkzeugmagazin (66) spiegelgleich zum Werkzeugmagazin (47) ausgebildet ist.

5. Verfahren zum Betreiben einer Werkzeugmaschine (1) mit einem Maschinengestell (2), einer ersten Arbeitsspindel (5), welche um eine erste Spindelachse (7) drehbar gelagert ist, zumindest einer zweiten Arbeitsspindel (6), welche um eine zweite Spindelachse (8) drehbar gelagert ist und einer Werkstückspannvorrichtung (18), welche zum Aufnehmen zumindest eines ersten Werkstückes (32) und eines zweiten Werkstückes (33) ausgebildet ist, wobei die erste Arbeitsspindel (5) und die zweite Arbeitsspindel (6) vertikal übereinander angeordnet sind, umfassend die Verfahrensschritte:
- Bearbeiten des ersten Werkstückes (32) mittels der ersten Arbeitsspindel (5);
- Bearbeiten des zweiten Werkstückes (33) mittels der zweiten Arbeitsspindel (6),
wobei, am Maschinengestell (2) ein Werkstücktisch (62) und ein Werkstücktisch (63) angeordnet sind, wobei ein erster Werkstücktisch (19) und einer der Werkstücktische (62) bezüglich der horizontalen X-Achse (10) zueinander beabstandet angeordnet sind und wobei ein zweiter Werkstücktisch (20) und der andere der Werkstücktische (63) bezüglich der horizontalen X-Achse (10) zueinander beabstandet angeordnet sind, wobei die erste Arbeitsspindel (5) dem ersten Werkstücktisch (19) zugeordnet ist und wobei die zweite Arbeitsspindel (6) dem zweiten Werkstücktisch (20) zugeordnet ist und wobei eine Arbeitsspindel (58) einem der Werkstücktische (62) zugeordnet ist und wobei eine Arbeitsspindel (59) dem anderen Werkstücktisch (63) zugeordnet ist,
wobei
am Werkstücktisch (62) ein Werkstück (68) aufgenommen ist und am Werkstücktisch (63) ein Werkstück (69) aufgenommen ist, wobei die Arbeitsspindel (58) zum Bearbeiten des Werkstückes (68) dient und wobei die Arbeitsspindel (59) zum Bearbeiten des Werkstückes (69) dient, wobei das Bearbeiten des ersten Werkstückes (32), das Bearbeiten des zweiten Werkstückes (33) das Bearbeiten des Werkstückes (68) und das Bearbeiten des Werkstückes (69) zeitgleich erfolgt.

6. Verfahren nach Anspruch 5, **dadurch gekennzeichnet, dass** das erste Werkstück (32), das zweite Werkstück (33), das Werkstück (68) und das Werkstück (69) gleich ausgebildet sind, wobei die Bearbeitung am ersten Werkstück (32), am zweiten Werkstück (33), am vierten Werkstück (68) und am fünften Werkstück (69) parallel in jeweils zeitgleich ausgeführten Arbeitsschritten erfolgt.

## Claims

1. A machine tool (1) comprising:
a machine frame (2);
at least one first working spindle (5) which is pivotable about a first spindle axis (7);
at least one second working spindle (6) which is pivotable about a second spindle axis (8);
a workpiece clamping device (18) which is configured to receive at least a first workpiece (32) and a second workpiece (33),
wherein the first working spindle (5) and the second working spindle (6) are arranged vertically above one another,
wherein
a workpiece table (62) and a workpiece table (63) are arranged on the machine frame (2), wherein a first workpiece table (19) and one of the workpiece tables (62) are arranged at a distance from one another with respect to the horizontal X-axis (10), and wherein a second workpiece table (20) and the other of the workpiece tables (63) are arranged at a distance from one another with respect to the horizontal X-axis (10), wherein the first working spindle (5) is associated with the first workpiece table (19), and wherein the second working spindle (6) is associated with the second workpiece table (20), and
wherein a working spindle (58) is associated with one of the workpiece tables (62), and wherein a working spindle (59) is associated with the other workpiece table (63).

2. The machine tool (1) according to claim 1, **characterized in that** the workpiece clamping device (18) comprises at least the first workpiece table (19) and the second workpiece table (20), wherein the first workpiece table (19) is mounted so as to be pivotable about a first pivot axis (21) which is aligned parallel to a horizontal X-axis (10), and the second workpiece table (20) is mounted so as to be pivotable about a second pivot axis (22) which is aligned parallel to the X-axis (10).

3. The machine tool (1) according to claim 1, **characterized in that** a tool magazine (47) is arranged at a longitudinal end (46) of the workpiece clamping device (18), wherein the tool magazine (47) comprises a chain circulation magazine (48), wherein a straight run (49) of the chain circulation magazine (48) is aligned vertically, wherein the first working spindle (5) and the second working spindle (6) can be displaced to the straight run (49) of the chain circulation magazine (48), wherein a distance (35) between the first working spindle (5) and the second working spindle (6) corresponds to a pitch (51) or a multiple of the pitch (51) of the chain circulation magazine (48).

4. The machine tool (1) according to claim 3, **characterized in that** a further tool magazine (66) is arranged at a second longitudinal end (65) of the workpiece clamping device (18), wherein the further tool magazine (66) is configured to be symmetrical to the tool magazine (47).

5. A method for operating a machine tool (1) having a machine frame (2), a first working spindle (5) which is pivotable about a first spindle axis (7), at least one second working spindle (6) which is pivotable about a second spindle axis (8), and a workpiece clamping device (18) which is configured to receive at least a first workpiece (32) and a second workpiece (33), wherein the first working spindle (5) and the second working spindle (6) are arranged vertically one above the other, comprising the method steps:
- processing the first workpiece (32) by means of the first working spindle (5);
- processing the second workpiece (33) by means of the second working spindle (6), wherein
a workpiece table (62) and a workpiece table (63) are arranged on the machine frame (2), wherein a first workpiece table (19) and one of the workpiece tables (62) are arranged at a distance from one another with respect to the horizontal X-axis (10), and wherein a second workpiece table (20) and the other of the workpiece tables (63) are arranged at a distance from one another with respect to the horizontal X-axis (10), wherein the first working spindle (5) is associated with the first workpiece table (19), and wherein the second working spindle (6) is associated with the second workpiece table (20), and wherein a working spindle (58) is associated with one of the workpiece tables (62), and wherein a working spindle (59) is associated with the other workpiece table (63), wherein
a workpiece (68) is received on the workpiece table (62) and a workpiece (69) is received on the workpiece table (63), wherein the working spindle (58) serves for processing the workpiece (68) and wherein the working spindle (59) serves for processing the workpiece (69), wherein the processing of the first workpiece (32), the processing of the second workpiece (33), the processing of the workpiece (68) and the processing of the workpiece (69) take place simultaneously.

6. The method according to claim 5, **characterized in that** the first workpiece (32), the second workpiece (33), the workpiece (68) and the workpiece (69) are configured identically, wherein the processing on the first workpiece (32), on the second workpiece (33), on the fourth workpiece (68) and on the fifth workpiece (69) is carried out in parallel in respective simultaneous working steps.

## Revendications

1. Machine-outil (1) comprenant :
un bâti de machine (2) ;
au moins une première broche de travail (5), qui est montée de manière rotative autour d'un premier axe de broche (7) ;
au moins une deuxième broche de travail (6), qui est montée de manière rotative autour d'un deuxième axe de broche (8) ;
un dispositif de serrage de pièce à usiner (18) qui est formé pour accueillir au moins une première pièce à usiner (32) et une deuxième pièce à usiner (33),
la première broche de travail (5) et la deuxième broche de travail (6) étant agencées verticalement l'une au-dessus de l'autre,
un plateau porte-pièce à usiner (62) et un plateau porte-pièce à usiner (63) étant agencés sur le bâti de machine (2), le premier plateau porte-pièce à usiner (19) et l'un des plateaux porte-pièce à usiner(62) étant agencés à distance l'un de l'autre par rapport à l'axe X horizontal (10) et un deuxième plateau porte-pièce à usiner (20) et l'autre des plateaux porte-pièce à usiner (63) étant agencés à distance l'un de l'autre par rapport à l'axe X horizontal (10), la première broche de travail (5) étant attribuée au premier plateau porte-pièce à usiner (19) et la deuxième broche de travail (6) étant attribuée au deuxième plateau porte-pièce à usiner (20) et une broche de travail (58) étant attribuée à l'un des plateaux porte-pièce à usiner (62)et une broche de travail (59) étant attribuée à l'autre plateau porte-pièce à usiner (63).

2. Machine-outil (1) selon la revendication 1, **caractérisé en ce que** le dispositif de serrage de pièce à usiner (18) comprend au moins le premier plateau porte-pièce à usiner (19) et le deuxième plateau porte-pièce à usiner (20), le premier plateau porte-pièce à usiner (19) étant monté de manière rotative autour d'un premier axe de pivotement (21) qui est aligné parallèlement à un axe X horizontal (10) et le deuxième plateau porte-pièce à usiner (20) étant monté de manière rotative autour d'un deuxième axe de pivotement (22), qui est aligné parallèlement à l'axe X (10).

3. Machine-outil (1) selon la revendication 1, **caractérisé en ce**
**qu'**un magasin d'outils (47) est disposé sur une extrémité longitudinale (46) du dispositif de serrage de pièce à usiner (18), le magasin d'outils (47) comprenant un magasin à circulation de chaîne (48), un brin droit (49) du magasin à circulation de chaîne (48) étant aligné verticalement, la première broche de travail (5) et la deuxième broche de travail (6) pouvant coulisser vers le brin droit (49) du magasin à circulation de chaîne (48), une distance (35) entre la première broche de travail (5) et la deuxième broche de travail (6) correspondant à un pas (51) ou à un multiple du pas (51) du magasin à circulation de chaîne (48).

4. Machine-outil (1) selon la revendication 3, **caractérisé en ce**
**qu'**un autre magasin d'outils (66) est agencé sur une deuxième extrémité longitudinale (65) du dispositif de serrage de pièce à usiner (18), l'autre magasin d'outils (66) étant conçu pour être une image miroir du magasin d'outils (47).

5. Procédé pour l'exploitation d'une machine-outil (1) avec un bâti de machine (2), une première broche de travail (5) qui est montée de manière rotative autour d'un premier axe de broche (7), au moins une deuxième broche de travail (6) qui est montée de manière rotative autour d'un deuxième axe de broche (8) et un dispositif de serrage de pièce à usiner (18) qui est conçu pour accueillir au moins une première pièce à usiner (32) et une deuxième pièce à usiner (33), la première broche de travail (5) et la deuxième broche de travail (6) étant agencées verticalement l'une au-dessus de l'autre, comprenant les étapes de procédé ci-dessous :
- Usinage de la première pièce à usiner (32) au moyen de la première broche de travail (5) ;
- Usinage de la deuxième pièce à usiner (33) au moyen de la deuxième broche de travail (6), un plateau porte-pièce à usiner (62) et un plateau porte-pièce à usiner (63) étant agencés sur le bâti de machine (2), un premier plateau porte-pièce à usiner (19) et l'un des plateaux porte-pièce à usiner (62) étant agencés à distance l'un de l'autre par rapport à l'axe X horizontal (10) et un deuxième plateau porte-pièce à usiner (20) et l'autre plateau porte-pièce à usiner (63) étant agencés à distance l'un de l'autre par rapport à l'axe X horizontal (10), la première broche de travail (5) étant attribuée au premier plateau porte-pièce à usiner (19) et la deuxième broche de travail (6) étant attribuée au deuxième plateau porte-pièce à usiner (20) et une broche de travail (58) étant attribuée à l'un des plateaux porte-pièce à usiner (62) et une broche de travail (59) étant attribuée à l'autre plateau porte-pièce à usiner (63),
une pièce à usiner (68) étant admise sur le plateau porte-pièce à usiner (62) et une pièce à usiner (69) étant admise sur le plateau porte-pièce à usiner (63), la broche de travail (58) étant utilisée pour usiner la pièce à usiner (68) et la broche de travail (59) étant utilisé pour usiner la pièce à usiner (69), l'usinage de la première pièce à usiner (32), l'usinage de la deuxième pièce à usiner (33), l'usinage de la pièce à usiner (68) et l'usinage de la pièce à usiner (69) se déroulant au même moment.

6. Procédé selon la revendication 5, **caractérisé en ce que** la première pièce à usiner (32), la deuxième pièce à usiner (33), la pièce à usiner (68) et la pièce à usiner (69) sont formés de la même manière, les usinages effectués sur la première pièce à usiner (32), sur la deuxième pièce à usiner (33), sur la quatrième pièce à usiner (68) et sur la cinquième pièce à usiner (69) ayant lieu en parallèle lors d'étapes de travail réalisées simultanément.
